# EUROPEAN PATENT SPECIFICATION

(11) **EP 4 321 757 B1**
(45) Date of publication and mention of the grant of the patent: **02.07.2025**
(21) Application number: 23183640.4
(22) Date of filing: 05.07.2023
(51) Int. Cl.: F04C 25/02, F25B 45/00, B60H 1/00

(54) **VACUUM PUMP SERVICING ADAPTER, SERVICE UNIT FOR A VEHICLE AIR CONDITIONING SYSTEM AND METHOD FOR SERVICING A VACUUM PUMP OF A SERVICE UNIT**
VAKUUMPUMPEN-WARTUNGSADAPTER, SERVICEEINHEIT FÜR EINE FAHRZEUGKLIMAANLAGE UND VERFAHREN ZUM WARTEN EINER VAKUUMPUMPE EINER SERVICEEINHEIT
ADAPTATEUR D'ENTRETIEN DE POMPE À VIDE, UNITÉ DE SERVICE POUR UN SYSTÈME DE CLIMATISATION DE VÉHICULE ET PROCÉDÉ D'ENTRETIEN D'UNE POMPE À VIDE D'UNE UNITÉ DE SERVICE

(30) Priority: 11.08.2022 DE 102022208373
(43) Date of publication of application: 14.02.2024
(73) Proprietor: Dometic Sweden AB, 171 54 Solna (SE)
(72) Inventor: Esch, Franz-Josef, 48477 Hörstel (DE)
(74) Representative: Grosse, Felix Christopher

(56) References cited:
- EP-A2- 2 439 471
- US-A- 6 134 896
- US-A1- 2010 183 467
- US-A1- 2014 260 400

## Description

The present invention relates to a vacuum pump servicing adapter for servicing a vacuum pump of a service unit for a vehicle air conditioning system, a service unit for a vehicle air conditioning system and a method for servicing a vacuum pump of a service unit for a vehicle air conditioning system.

Vehicle air conditioning systems, particularly air conditioning systems of recreational vehicles, need to be serviced in regular intervals. During servicing, the refrigerant used in the refrigerant circuit of the vehicle air conditioning system is exchanged. That is, used refrigerant is replaced by fresh refrigerant. For this purpose, service units for vehicle air conditioning systems are known with which the exchange of the refrigerant can be performed. These service units regularly comprise pumps for draining used refrigerant from the refrigerant circuit and for refilling the refrigerant circuit with fresh refrigerant.

In order to ensure that no moisture or other contaminants remain in the refrigerant circuit, which would deteriorate the cooling performance and longevity of the vehicle air conditioning system, these service units additionally comprise a vacuum pump for evacuating the refrigerant circuit before refilling it with fresh refrigerant. Due to their design, these vacuum pumps require vacuum pump oil for lubrication of the moving parts of the vacuum pump and for sealing against atmospheric pressure. In order to maintain the desired vacuum performance of the vacuum pump, the vacuum pump oil has to be exchanged on a regular basis, as well.

For the vacuum pump to function correctly, is important that the correct amount of the correct type of vacuum pump oil is used when refilling the vacuum pump oil. Up to now, the vacuum pump oil is provided in standard oil containers and the user servicing the vacuum pump has to measure the correct amount of vacuum pump oil which needs to be refilled into the vacuum pump or check an inspection glass of the vacuum pump to ensure that the correct amount of vacuum pump oil is refilled. Depending on the vacuum pump of the service unit, different amounts of different types of vacuum pump oil are necessary, however. Especially in service centers which service different kinds of recreational vehicles for their customers, multiple service units for the different kinds of air conditioning units have to be available. These different service units may use different vacuum pumps which require different amounts of different types of vacuum pump oil. Thus, it is obvious that errors regarding the correct type or the correct amount of vacuum pump oil can occur when servicing the vacuum pumps of different service units.

Furthermore, in known service units, the vacuum pump is located within a housing of the service unit. To service the vacuum pump, that is, to exchange the vacuum pump oil, the housing of the service unit has to be opened, the used vacuum pump oil has to be drained from the vacuum pump and fresh vacuum pump oil has to be refilled into the vacuum pump using a funnel. Afterwards, the housing has to be closed again. This procedure is rather time consuming.

US2010183467A1 discloses a service unit for an air conditioning system comprising a housing, a vacuum pump and a connection element configured to be connected to an oil container; a ventilation element is configured to be connected to the connection element.

Additionally, with the refrigerants used in vehicle air conditioning systems, it is important that the interior of the service unit is properly ventilated so that refrigerant gases which might leak during use of the service unit can evaporate. Improperly closing the housing of the service unit after servicing the vacuum pump is, therefore, another potential source of error.

In light of the above, it is an object of the present invention to provide a possibility for servicing a vacuum pump of a service unit for a vehicle air conditioning system in a quicker and more reliable manner.

This object is achieved with a vacuum pump servicing adapter according to claim 1.

The vacuum pump servicing adapter for servicing a vacuum pump of a service unit for a vehicle air conditioning system according to the present invention comprises a connection element and a ventilation element. The connection element is configured to be connected to an oil container and the ventilation element is configured to be connected to the connection element in a storage orientation and in a ventilation orientation.

The ventilation element is a component which is separate from the connection element and which can be connected to the connection element in two different orientations. The connection between the ventilation element and the connection element as well as between the oil container and the connection element can be realized in multiple different manners such as via a screw connection or a plug-on connection. It is important, that the respective connection is a reversible connection. The connection between the ventilation element and the connection element in the ventilation orientation can be different than in the storage orientation. In particular, the ventilation element is connected to the connection element in the ventilation orientation via a screw connection. In particular, the ventilation element is connected to the connection element in the storage orientation via a plug-on connection. In particular, the connection element is connected to the oil container via a screw connection.

The vacuum pump servicing adapter according to the invention facilitates draining and refilling of vacuum pump oil from and into the vacuum pump of a service unit for a vehicle air conditioning system. Thus, servicing of the vacuum pump is achieved in a quicker and more reliable manner.

Preferably, the connection element comprises a first ventilation port, a second ventilation port, a ventilation line connecting the first ventilation port and the second ventilation port, a ventilation valve arranged in the ventilation line, a first oil port, a second oil port, an oil line connecting the first oil port and the second oil port, and an oil valve arranged in the oil line. In particular, the connection element comprises a connection element body in which the first ventilation port, the second ventilation port, the ventilation line, the ventilation valve, the first oil port, the second oil port, the oil line and the oil valve are provided. In particular, the first ventilation port comprises an opening in a side wall of the connection element body. In particular, the connection element body comprises an internal thread for connecting the ventilation element in the ventilation orientation and the oil container to the connection element. In particular, the ventilation element comprises an external thread for connecting the ventilation element to the connection element in the ventilation orientation. It is obvious to the skilled person that the ventilation element can comprise an internal thread and the connection element can comprise an external thread for connecting the two components. By providing the ventilation valve and the oil valve, the connection between the first ventilation port and the second ventilation port as well as the connection between the first oil port and the second oil port can be selectively opened and closed. This results in a controlled exchange of oil and a controlled ventilation.

Preferably, the ventilation valve is a check valve. Preferably, the oil valve is a check valve. In particular the ventilation valve is a spring-loaded check valve. In particular, the oil valve is a spring-loaded check valve. By providing check valves, in particular spring-loaded check valves, as the ventilation valve and the oil valve, the connection between the first ventilation port and the second ventilation port as well as the connection between the first oil port and the second oil port can be selectively opened and closed in a particularly reliable manner.

Preferably, the ventilation valve is opened by the ventilation element when the ventilation element is connected to the connection element in the ventilation orientation. In particular, the first ventilation port is open to the surroundings when the ventilation element is connected to the connection element in the ventilation orientation and the second ventilation port is connected to the surroundings via the ventilation line, the open ventilation valve and the first ventilation port. Thus, ventilation with the surroundings is possible when the ventilation element is connected to the connection element in the ventilation orientation.

Preferably, the ventilation valve is closed when the ventilation element is connected to the connection element in the storage orientation. In particular, a portion of the ventilation element covers the first ventilation port when the ventilation element is connected to the connection element in the storage orientation. Thus, the second ventilation port is not connected to the surroundings when the ventilation element is connected to the connection element in the storage orientation. Additionally, the first connection port is shielded from the surroundings by the ventilation element. This ensures that no contamination can enter into the connection element when the ventilation element is connected to the connection element in the storage orientation.

Preferably, the oil valve is opened by the oil container when the oil container is connected to the connection element. In particular, the oil valve and the ventilation valve are opened by the oil container when the oil container is connected to the connection element. Alternatively, the ventilation valve may be opened by the ventilation element when the ventilation element and the oil container are connected to the connection element. In particular, the oil container is connected to the first oil port and the second oil port is connected to the oil container via the oil line, the open oil valve and the first oil port when the oil container is connected to the connection element. In particular, the first ventilation port is open to the surroundings and the second ventilation port is connected to the surroundings via the ventilation line, the ventilation valve and the first ventilation port when the oil container is connected to the connection element. Thus, vacuum pump oil from the oil container is provided at the second oil port and ventilation with the surroundings is provided at the second ventilation port when the oil container is connected to the connection element.

Preferably, the vacuum pump servicing adapter further comprises a protection cap configured to be connected to the ventilation element when the ventilation element is connected to the connection element in the storage orientation. In particular, the protection cap comprises an internal thread for screwing onto an external thread of the ventilation element. The vacuum pump servicing adapter is in a storage state when the ventilation element is connected to the connection element in the storage orientation and the protection cap is connected to the ventilation element. With the protection cap, protection of the vacuum pump servicing adapter against contamination from the outside is increased when the vacuum pump servicing adapter is in the storage state.

Furthermore, the object of the invention is achieved with a service unit according to claim 9. The service unit for a vehicle air conditioning system according to the invention comprises a housing, a vacuum pump and a vacuum pump servicing adapter as described above. The vacuum pump comprises a pump unit and an oil reservoir, wherein the oil reservoir comprises an oil drain.

With the service unit according to the present invention, the vacuum pump of the service unit can be serviced in a quicker and more reliable manner due to the vacuum pump servicing adapter.

Preferably, the service unit further comprises an oil pipe and a ventilation pipe and the oil reservoir further comprises an oil inlet and a ventilation connection. The vacuum pump servicing adapter is located outside the housing. The oil pipe is connected to the oil inlet and the vacuum pump servicing adapter and the ventilation pipe is connected to the ventilation connection and the vacuum pump servicing adapter. In particular, a first end of the oil pipe is connected to the oil inlet and a second end of the oil pipe is connected to the second oil port of the connection element of the vacuum pump servicing adapter. In particular, a first end of the ventilation pipe is connected to the ventilation connection and a second end of the ventilation pipe is connected to the second ventilation port of the vacuum pump servicing adapter. Thus, the vacuum pump can be serviced via the vacuum pump servicing adapter.

Preferably, the oil drain is accessible from outside the housing. Thus, the housing does not have to be opened to drain used vacuum pump oil from the oil reservoir of the vacuum pump.

Preferably, the vacuum pump is located inside the housing. Preferably, the vacuum pump further comprises an inspection glass visible from outside the housing. In particular, the vacuum pump oil level in the oil reservoir is visible through the inspection glass. Thus, the vacuum pump is securely located inside the housing. With the inspection glass visible from outside the housing, it is possible to check the level of the vacuum pump oil within the oil reservoir without opening the housing of the service unit which makes servicing the vacuum pump even more reliable.

Furthermore, the object is achieved with a method according to claim 14. The method for servicing a vacuum pump of a service unit as described above comprises the steps of draining used vacuum pump oil from the oil reservoir of the vacuum pump and refilling the oil reservoir of the vacuum pump with fresh vacuum pump oil.

Preferably, the step of draining used vacuum pump oil comprises the steps of connecting the ventilation element of the vacuum pump servicing adapter to the connection element of the vacuum pump servicing adapter in the ventilation orientation, opening the oil drain of the oil reservoir, and closing the oil drain of the oil reservoir. In particular, the step of draining used vacuum pump oil additionally comprises the step of waiting until the entire used vacuum pump oil has been drained from the oil reservoir before closing the oil drain again. By connecting the ventilation element to the connection element in the ventilation orientation, the oil reservoir of the vacuum pump is connected to the surroundings via the ventilation connection, the ventilation pipe, the second ventilation port, the open ventilation valve and the first ventilation port. Thus, air can flow into the oil reservoir from the surroundings and the used oil can easily flow out of the oil drain of the oil reservoir when the oil drain is opened. Thus, the oil reservoir of the vacuum pump can be drained without opening the housing of the service unit.

Preferably, the step of draining used vacuum pump oil further comprises the step of removing the ventilation element from the connection element. Thus, the connection element is ready to be connected to an oil container. It is, however, also conceivable that the ventilation element stays connected to the connection element in the ventilation orientation and that the connection element is ready to be connected to an oil container, anyway.

Preferably, the step of refilling the oil reservoir comprises the steps of connecting a pressurized oil container to the connection element and removing the pressurized oil container from the connection element. In particular, the pressurized oil container is a two-chamber oil container comprising a rigid pressure chamber and a flexible oil chamber, wherein the pressure in the rigid pressure chamber causes the vacuum pump oil in the flexible oil chamber to exit the pressurized oil container once the pressurized oil container is connected to the connection element. Thus, the vacuum pump oil is provided to the oil reservoir via the vacuum pump servicing adapter automatically due to the pressure in the pressurized oil container. It is, however, also conceivable to additionally provide a vacuum oil pump to the service unit to suck fresh vacuum pump oil from an unpressurized oil container via the vacuum pump servicing adapter.

Preferably, the pressurized oil container contains the correct amount of vacuum pump oil necessary for refilling the oil reservoir of the vacuum pump. In particular, the pressurized oil container contains 420 ml or 450 ml of fresh vacuum pump oil. In particular, the step of refilling the oil reservoir comprises the step of waiting until the pressurized oil container is entirely empty before removing the pressurized oil container. Thus, it is not necessary to measure or check the correct amount of fresh vacuum pump oil refilled into the oil reservoir. Therefore, reliability of the servicing of the vacuum pump is further increased.

Preferably, the method further comprises the step of putting the vacuum pump servicing adapter into a storage state. In particular, the step of putting the vacuum pump servicing adapter into a storage state comprises the steps of connecting the ventilation element to the connection element in the storage orientation and connecting the protection cap to the ventilation element. However, the step of connecting the protection cap to the ventilation element can be omitted, if necessary and/ or desired. By putting the vacuum pump servicing adapter into the storage state, the vacuum pump servicing adapter is sufficiently protected from contamination from the outside when it is not used for servicing the vacuum pump.

In the following, an embodiment of the present invention is described with reference to the accompanying schematic figures, wherein:
- Fig. 1: shows a side view of a service unit for a vehicle air conditioning unit with a vacuum pump servicing adapter according to the present invention in which components located inside a housing of the service unit are visible for better understanding;
- Fig. 2: shows a perspective view of a connection element of the vacuum pump servicing adapter of the service unit shown in Fig. 1;
- Fig. 3: shows a top view of the connection element shown in Fig. 2;
- Fig. 4: shows a sectional view of the connection element along the section line A-A shown in Fig. 3;
- Fig. 5: shows another sectional view of the connection element and a ventilation element connected to the connection element in a ventilation orientation;
- Fig. 6: shows another sectional view of the connection element and the ventilation element connected to the connection element in a storage orientation; and
- Figs. 7 to 14: are illustrations of method steps according to the present invention.

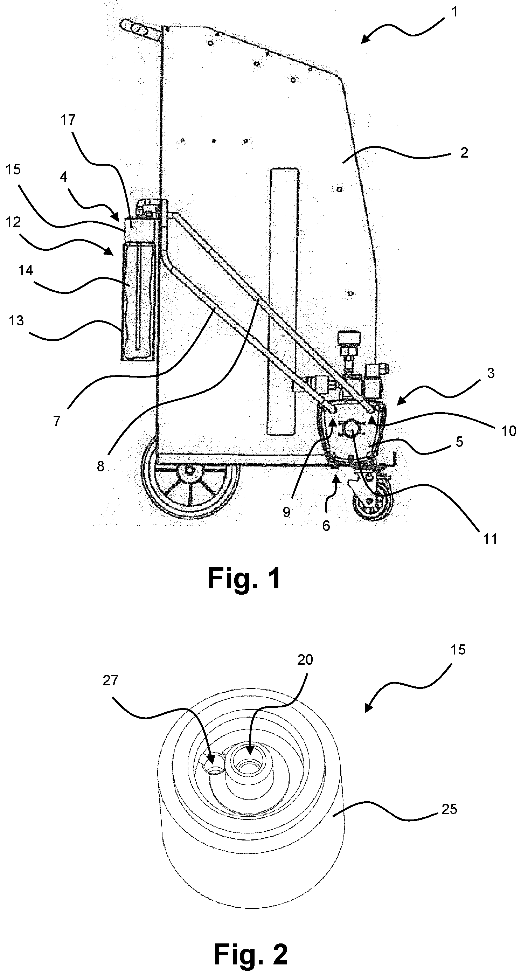

In Fig. 1, a service unit 1 for a vehicle air conditioning system of a recreational vehicle is shown. The service unit 1 comprises a housing 2, a vacuum pump 3 and a vacuum pump servicing adapter 4 which will be described in detail below. The vacuum pump 3 comprises a pump unit (not shown) and an oil reservoir 5. The oil reservoir 5 comprises an oil drain 6. The service unit 1 further comprises an oil pipe 7 and a ventilation pipe 8. The oil reservoir 5 further comprises an oil inlet 9 and a ventilation connection 10. A first end of the oil pipe 7 is connected to the oil inlet 9 of the vacuum pump 3 and a second end of the oil pipe 7 is connected to the vacuum pump servicing adapter 4. A first end of the ventilation pipe 8 is connected to the ventilation connection 10 of the vacuum pump 3 and a second end of the ventilation pipe 8 is connected to the vacuum pump servicing adapter 4.

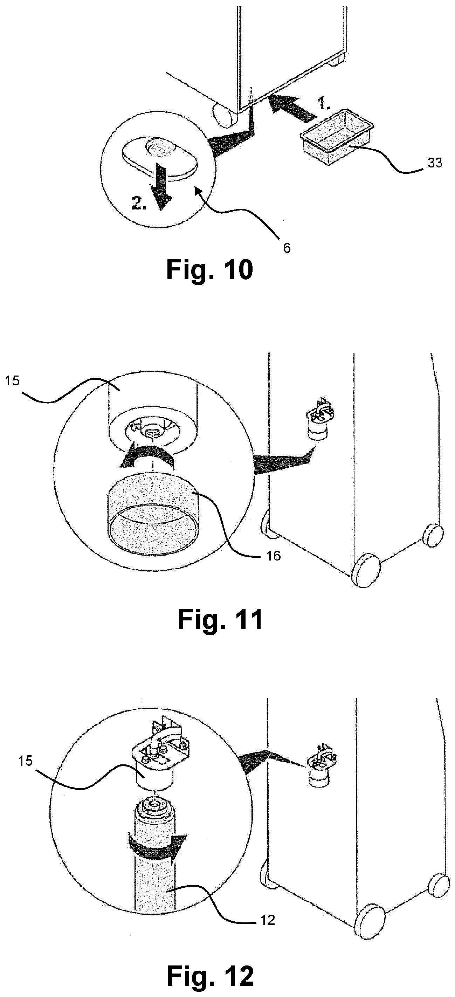

The oil drain 6 is accessible from outside the housing 2. In the present embodiment, the oil drain 6 is accessible from below the housing 2 as can be seen in Fig. 10. The oil drain 6 has a closing element such as an oil drain plug or an oil drain screw for opening the oil drain 6 and draining used vacuum pump oil from the oil reservoir 5.

In Fig. 1, some elements such as the vacuum pump 3, the oil pipe 7 and the ventilation pipe 8 are illustrated enlarged to facilitate understanding of the present invention. However, the vacuum pump 3 and the longest portions of the oil pipe 7 and the ventilation pipe 8 are located inside the housing 2. The oil reservoir 5 of the vacuum pump 3 further comprises an inspection glass 11 which is visible from outside the housing 2. For the inspection glass 11 to be visible from outside the housing 2, the housing 2 comprises an opening or another inspection glass. Through the inspection glass 11, the oil level in the oil reservoir 5 is visible.

A pressurized oil container 12 is illustrated in Fig. 1 which is connected to the vacuum pump servicing adapter 4. The pressurized oil container 12 is a two-chamber oil container comprising a rigid pressure chamber 13 and a flexible oil chamber 14. The flexible oil chamber 14 is located inside the rigid pressure chamber 13, as can be seen in Fig. 1. The pressure in the rigid pressure chamber 13 is used to push the oil contained in the flexible oil chamber 14 out of the pressurized oil container 12 once a valve closing the flexible oil chamber 14 is opened.

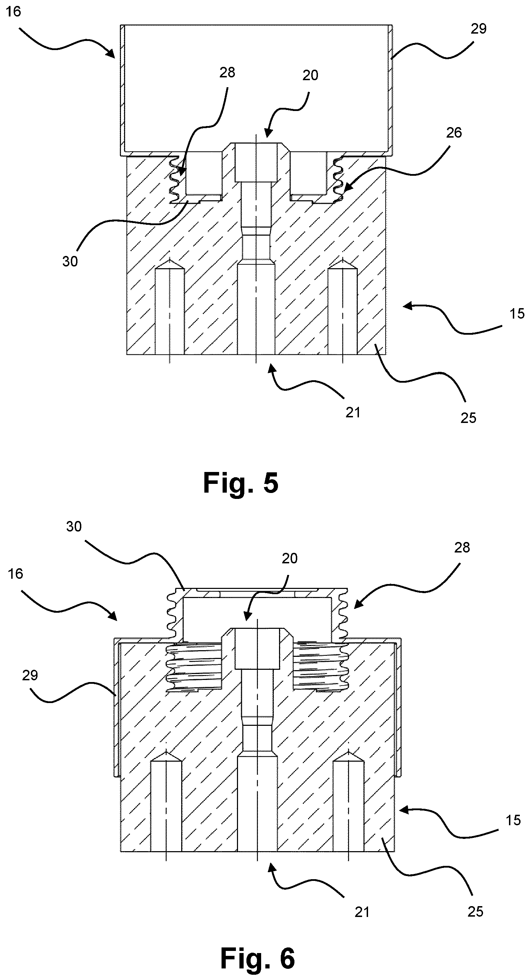

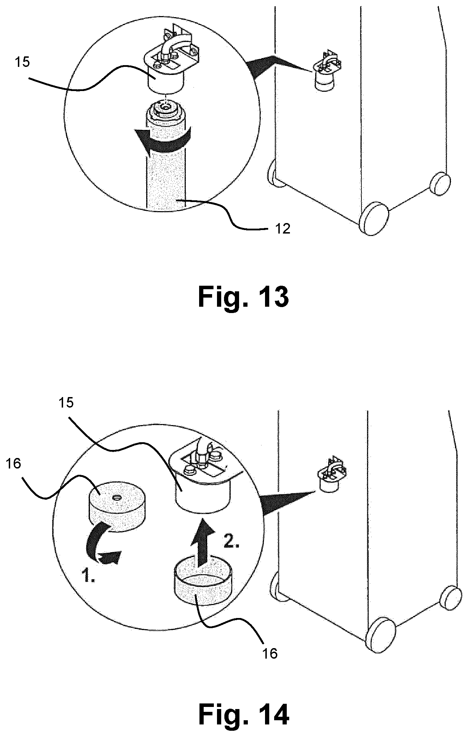

With respect to Figs. 2 to 6, the vacuum pump servicing adapter 4 will now be described in detail. The vacuum pump servicing adapter 4 for servicing the vacuum pump 3 of the service unit 1 comprises a connection element 15 and a ventilation element 16 (see Figs. 5 and 6). The connection element 15 is configured to be connected to the pressurized oil container 12 and the ventilation element 16 is configured to be connected to the connection element 15 in a storage orientation (see Fig. 6) and in a ventilation orientation (see Fig. 5). In comparison to Fig. 1 and Figs. 7 to 14 discussed below, the connection element 15 is illustrated upside down in Figs. 5 and 6.

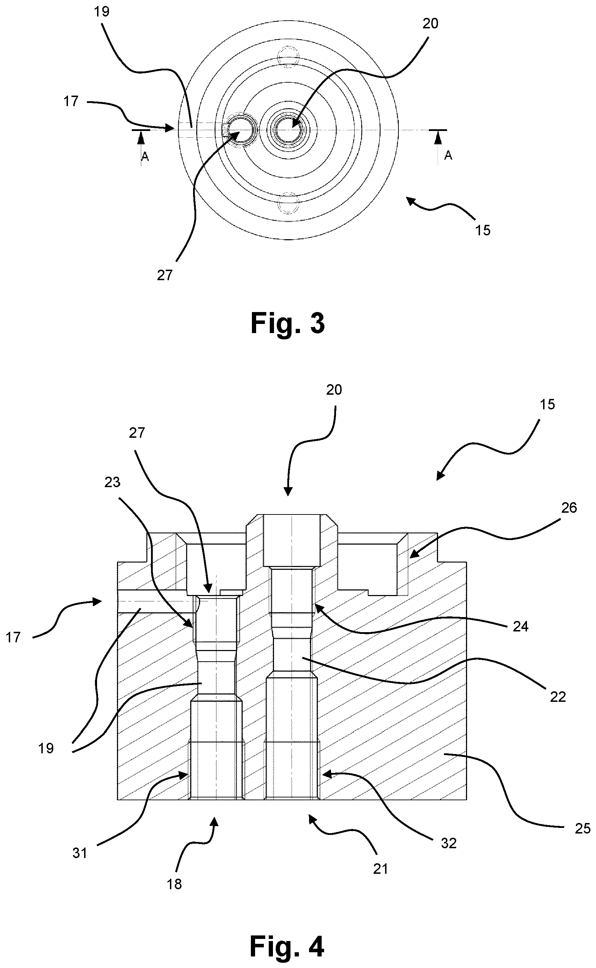

As can be seen in Fig. 4, for example, the connection element 15 comprises a connection element body 25 in which a first ventilation port 17, a second ventilation port 18, a ventilation line 19 connecting the first ventilation port 17 and the second ventilation port 18, a ventilation valve (not shown) arranged in the ventilation line 19, a first oil port 20, a second oil port 21, an oil line 22 connecting the first oil port 20 and the second oil port 21 and an oil valve (not shown) arranged in the oil line 22 are arranged. The first ventilation port 17 is an opening in a side wall of the connection element body 25. As seen in Fig. 4, the ventilation line 19 is a channel in the connection element body 25 having a rectangular path and the oil line 22 is a channel in the connection element body 25 having a straight path.

The ventilation valve and the oil valve are spring-loaded check valves screwed into the ventilation line 19 and into the oil line 22, respectively. For that purpose, the connection element 15 comprises a first internal thread 23 in the ventilation line 19 and a second internal thread 24 in the oil line 22. The ventilation valve is screwed into the first internal thread 23 and the oil valve is screwed into the second internal thread 24. Thus, the ventilation valve is arranged in the ventilation line 19 and the oil valve is arranged in the oil line 22.

The connection element 15 further comprises a third internal thread 26 for connection with the ventilation element 16 and the pressurized oil container 12. The recess in which the third internal thread 26 is arranged has an opening 27 towards the ventilation line 19 so that the ventilation valve can be screwed into the first internal thread 23 in the ventilation line 19.

When the ventilation element 16 is connected to the connection element 15 in the ventilation orientation as shown in Fig. 5, the ventilation valve is opened by the ventilation element 16. As shown in Figs. 5 and 6, the ventilation element 16 comprises an external thread 28, a cylindrical portion 29 and a valve opening portion 30. When the ventilation element 16 is screwed into the connection element 15, the valve opening portion 30 abuts against an operating pin of the ventilation valve. Once the ventilation element 16 is completely screwed into the connection element 15 and, thus, connected to the connection element 15 in the ventilation orientation, the valve opening portion 30 has pushed the operating pin of the ventilation valve so far that the ventilation valve is completely open. In the present embodiment, if the pressurized oil container 12 is connected to the connection element 15, that is, the pressurized oil container 12 is screwed into the third internal thread 26, the ventilation valve is equally opened. Once the ventilation valve is open, the second ventilation port 18 is connected to the surroundings via the ventilation line 19, the open ventilation valve and the first ventilation port 17, thus enabling ventilation of the oil reservoir 5.

In Fig. 6, the ventilation element 16 is shown connected to the connection element 15 in a storage orientation. In comparison with Fig. 5, the ventilation element 16 is turned by 180 degrees and has been pushed over the connection element 15 to form a plug-on connection. For this purpose, the inner diameter of the cylindrical portion 29 of the ventilation element 16 is slightly larger than the external diameter of the connection element body 25. When the ventilation element 16 is connected to the connection element 15 in the storage orientation as shown in Fig. 6, the interior of the cylindrical portion 29 covers the opening in the side wall of the connection element body 25, that is, the first ventilation port 17.

While the ventilation element 16 and the connection element 15 of the present embodiment are cylindrically shaped, these components can, of course, also have different matching shapes. As can also be seen in Fig. 6, the external thread 28 of the ventilation element 16 is pointing away from the connection element 15 when the ventilation element 16 is connected to the connection element 15 in the storage orientation so that a protection cap (not shown) can be screwed onto the external thread 28 of the ventilation element 16.

When the pressurized oil container 12 is connected to the connection element 15, that is, when the pressurized oil container 12 is screwed into the third internal thread 26, the oil valve arranged in the oil line 22 is opened in a generally known manner by the pressurized oil container 12. Accordingly, the valve in the pressurized oil container is also opened so that the flexible oil chamber 14 is connected to the second oil port 21 via the first oil port 20, the oil line 22 and the open oil valve.

As can be seen in Fig. 4, the connection element 15 further comprises a fourth internal thread 31 and a fifth internal thread 32. The fourth internal thread 31 is provided in the second ventilation port 18 for connecting the second end of the ventilation pipe 8 to the second ventilation port 18 of the connection element 15. The fifth internal thread 32 is provided in the second oil port 21 for connecting the second end of the oil pipe 7 to the second oil port 21 of the connection element 15.

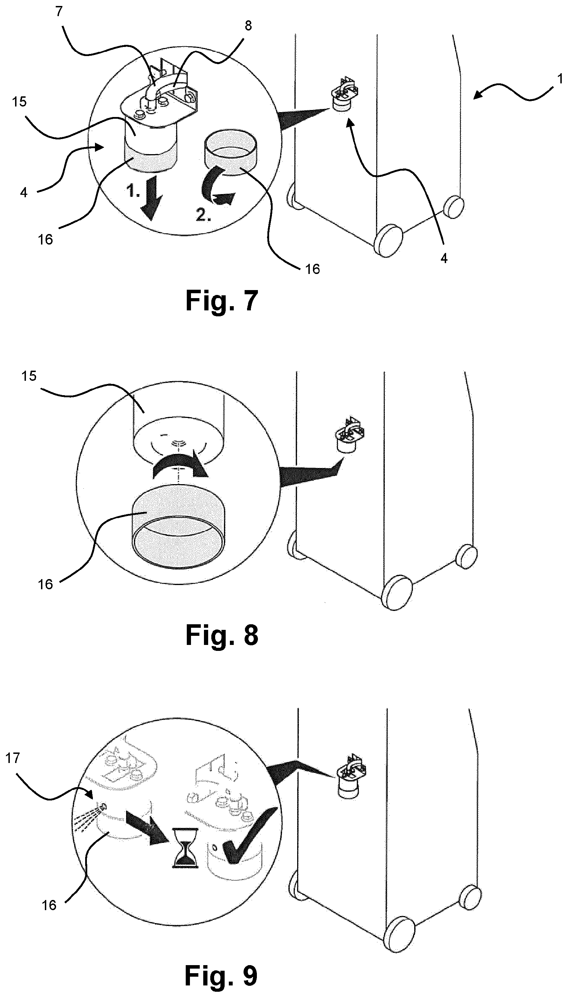

A method for servicing the vacuum pump 4 of the service unit 1 for a vehicle air conditioning system will now be described with respect to Figs. 7 to 14. The method basically comprises the steps of draining used vacuum pump oil from the oil reservoir 5 of the vacuum pump 3 of the service unit 1 and refilling the oil reservoir 5 with fresh vacuum pump oil.

Initially, the vacuum pump servicing adapter 4 will usually be in the storage state. That is, the protection cap is connected to the external thread 28 of the ventilation element 16 which is connected to the connection element 15 in the storage orientation as shown in Fig. 6. As shown in Fig. 7, after removing the protection cap, the ventilation element 16 is first removed from the connection element 15, turned by 180 degrees and then connected to connection element 15 in the ventilation orientation, see Fig. 8. That is, the external thread 28 of the ventilation element is screwed into the third internal thread 26 of the connection element 15 until the valve opening portion 30 of the ventilation element 16 has opened the ventilation valve of the connection element 15. In this ventilation state, the oil reservoir 5 is connected to the surroundings via the ventilation connection 10, the ventilation pipe 8, the second ventilation port 18, the ventilation line 19, the open ventilation valve and the first ventilation port 17.

As shown in Fig. 9, air may flow out from the oil reservoir 5 to the surroundings due to pressure that has built in the oil reservoir 5. After the oil reservoir 5 has been ventilated into the surroundings, an oil pan 33 is located under the oil drain 6 and the oil drain 6 is opened, as shown in Fig. 10. Thus, the used vacuum pump oil contained in the oil reservoir 5 will flow out of the oil drain 6 into the oil pan 33. After all the used oil has been drained into the oil pan 33, the oil drain 6 is closed again.

As can be seen in Fig. 11, in the present embodiment, the ventilation element 16 is removed again from the connection element 15 after the used oil has been drained from the oil reservoir 5 via the oil drain 6.

Next, the oil reservoir 5 is refilled with fresh vacuum pump oil. For this purpose, the pressurized oil container 12 is connected to the connection element 15 as shown in Fig. 12. When the pressurized oil container 12 is connected to the connection element 15, the oil valve and the ventilation valve are opened by the pressurized oil container 12. Thus, the oil reservoir 5 is connected to the flexible oil chamber 14 of the pressurized oil container 12 via the oil inlet 9, the oil pipe 7, the second oil port 21, the oil line 22, the open oil valve and the first oil port 20. Now, the fresh vacuum pump oil contained in the flexible oil chamber 14 is pushed into the oil reservoir 5 by the pressure in the rigid pressure chamber 13 until the flexible oil chamber 14 is essentially empty. While the fresh vacuum pump oil is flowing into the oil reservoir, air can leave the oil reservoir via the ventilation connection 10, the ventilation pipe 8, the second ventilation port 18, the ventilation line 19, the open ventilation valve and the first ventilation port into the surroundings so that no undesirable pressure will build in the oil reservoir 5.

Once the pressurized oil container 12 is empty, the pressurized oil container 12 is removed from the connection element 15 again which closes both the oil valve and the ventilation valve.

The pressurized oil container 12 is configured so that it contains the correct amount of vacuum pump oil necessary for refilling the oil reservoir 5 of the vacuum pump 3. This ensures that the amount of vacuum oil refilled into the oil reservoir 5 is automatically neither too large nor too small because the pressure in the rigid pressure chamber 13 will reliably empty the flexible oil chamber 14 containing the correct amount of vacuum pump oil for the vacuum pump 3 into the oil reservoir 5. It will, therefore, be obvious to the skilled person that providing the inspection glass 11 to the vacuum pump 3 and making it visible from outside the housing 2 is only required if a non-pressurized oil container is used in connection with a pump for refilling the oil reservoir 5 in an alternative embodiment of the present invention.

Finally, the vacuum pump servicing adapter 4 is put into the storage state again. The protection cap is connected to the ventilation element 16 and the ventilation element 16 is connected to the connection element 15 in the storage orientation. That is, the protection cap is screwed onto the external thread 28 of the ventilation element 16 and the cylindrical portion 29 of the ventilation element 16 is pushed over the connection element body 25 of the connection element 15. In the storage state, the vacuum pump servicing adapter 4 is closed to and protected from the surroundings. The spring-loaded oil valve and the spring-loaded ventilation valve are automatically closed by their respective spring forces once the pressurized oil container 12 is removed from the connection element 15, the first ventilation port 17 is covered by the cylindrical portion 29 of the ventilation element 16 and the first oil port is covered by the protection cap on the ventilation element 16.

With the above-described method according to the present invention, it is not necessary to open the housing 2 of the service unit 1 to service the vacuum pump 3 of the service unit 1. This both greatly reduces the time required for servicing the vacuum pump 3 and eliminates various sources of human error. Thus, with the vacuum pump servicing adapter 4 and the method according to the present invention, servicing the service pump 3 becomes both quicker and more reliable.

### REFERENCE SIGNS

- 1: service unit for a vehicle air conditioning system
- 2: housing
- 3: vacuum pump
- 4: vacuum pump servicing adapter
- 5: oil reservoir
- 6: oil drain
- 7: oil pipe
- 8: ventilation pipe
- 9: oil inlet
- 10: ventilation connection
- 11: inspection glass
- 12: pressurized oil container
- 13: rigid pressure chamber
- 14: flexible oil chamber
- 15: connection element
- 16: ventilation element
- 17: first ventilation port
- 18: second ventilation port
- 19: ventilation line
- 20: first oil port
- 21: second oil port
- 22: oil line
- 23: first internal thread
- 24: second internal thread
- 25: connection element body
- 26: third internal thread
- 27: opening
- 28: external thread
- 29: cylindrical portion
- 30: valve opening portion
- 31: fourth internal thread
- 32: fifth internal thread
- 33: oil pan

## Claims

1. Vacuum pump servicing adapter (4) for servicing a vacuum pump (3) of a service unit (1) for a vehicle air conditioning system comprising a connection element (15) and a ventilation element (16),
wherein the connection element (15) is configured to be connected to an oil container (12) and **characterised in that** the ventilation element (16) is configured to be connected to the connection element (15) in a storage orientation and in a ventilation orientation.

2. Vacuum pump servicing adapter (4) according to claim 1,
**characterized in that,**
the connection element (15) comprises a first ventilation port (17), a second ventilation port (18), a ventilation line (19) connecting the first ventilation port (17) and the second ventilation port (18), a ventilation valve arranged in the ventilation line (19), a first oil port (20), a second oil port (21), an oil line (22) connecting the first oil port (20) and the second oil port (21), and an oil valve arranged in the oil line (22).

3. Vacuum pump servicing adapter (4) according to claim 2,
**characterized in that,**
the ventilation valve is a check valve.

4. Vacuum pump servicing adapter (4) according to claim 2 or 3,
**characterized in that,**
the oil valve is a check valve.

5. Vacuum pump servicing adapter (4) according to any of claims 2 to 4,
**characterized in that,**
the ventilation valve is opened by the ventilation element (16) when the ventilation element (16) is connected to the connection element (15) in the ventilation orientation.

6. Vacuum pump servicing adapter (4) according to any of claims 2 to 5,
**characterized in that,**
the ventilation valve is closed when the ventilation element (16) is connected to the connection element (15) in the storage orientation.

7. Vacuum pump servicing adapter (4) according to any of claims 2 to 6,
**characterized in that,**
the oil valve is opened by the oil container (12) when the oil container (12) is connected to the connection element (15).

8. Vacuum pump servicing adapter (4) according to any of the preceding claims,
**characterized in that**
the vacuum pump servicing adapter (4) further comprises a protection cap configured to be connected to the ventilation element (16) when the ventilation element (16) is connected to the connection element (15) in the storage orientation.

9. Service unit (1) for a vehicle air conditioning system comprising a housing (2), a vacuum pump (3) and a vacuum pump servicing adapter (4) according to any of the preceding claims, wherein the vacuum pump (3) comprises a pump unit and an oil reservoir (5), wherein the oil reservoir (5) comprises an oil drain (6).

10. Service unit (1) according to claim 9,
**characterized in that,**
the service unit (1) further comprises an oil pipe (7) and a ventilation pipe (8) and the oil reservoir (5) further comprises an oil inlet (9) and a ventilation connection (10),
wherein the vacuum pump servicing adapter (4) is located outside the housing (2), wherein the oil pipe (7) is connected to the oil inlet (9) and the vacuum pump servicing adapter (4) and wherein the ventilation pipe (8) is connected to the ventilation connection (10) and the vacuum pump servicing adapter (4).

11. Service unit (1) according to claim 10,
**characterized in that,**
the oil drain (6) is accessible from outside the housing (2).

12. Service unit (1) according to any of claims 9 to 11,
**characterized in that**
the vacuum pump (3) is located inside the housing (2).

13. Service unit (1) according to any of claims 9 to 12,
**characterized in that,**
the vacuum pump (3) further comprises an inspection glass (11) visible from outside the housing (2).

14. Method for servicing a vacuum pump (3) of a service unit (1) according to any of claims 9 to 13 comprising the following steps:
- draining used vacuum pump oil from the oil reservoir (5) of the vacuum pump (3) and
- refilling the oil reservoir (5) of the vacuum pump (3) with fresh vacuum pump oil.

15. Method according to claim 14,
**characterized in that,**
the step of draining used vacuum pump oil comprises the following steps:
- connecting the ventilation element (16) of the vacuum pump servicing adapter (4) to the connection element (15) of the vacuum pump servicing adapter (4) in the ventilation orientation,
- opening the oil drain (6) of the oil reservoir (5), and
- closing the oil drain (6) of the oil reservoir (5).

16. Method according to claim 15,
**characterized in that,**
the step of draining used vacuum pump oil further comprises the following step:
- removing the ventilation element (16) from the connection element (15).

17. Method according to any of claims 14 to 16,
**characterized in that,**
the step of refilling the oil reservoir (5) comprises the following steps:
- connecting a pressurized oil container (12) to the connection element (15), and
- removing the pressurized oil container (12) from the connection element (15).

18. Method according to claim 17,
**characterized in that,**
the pressurized oil container (12) contains the correct amount of vacuum pump oil necessary for refilling the oil reservoir (5) of the vacuum pump (3).

19. Method according to any of claims 14 to 18,
**characterized in that,**
the method further comprises the step:
- putting the vacuum pump servicing adapter (4) into a storage state.

## Patentansprüche

1. Vakuumpumpen-Wartungsadapter (4) zur Wartung einer Vakuumpumpe (3) einer Wartungseinheit (1) für ein Klimaanlagensystem eines Fahrzeugs, umfassend ein Verbindungselement (15) und ein Belüftungselement (16),
wobei das Verbindungselement (15) ausgebildet ist, um mit einem Ölbehälter (12) verbunden zu werden,
**dadurch gekennzeichnet, dass**
das Belüftungselement (16) ausgebildet ist, um mit dem Verbindungselement (15) in einer Speicherausrichtung und in einer Belüftungsausrichtung verbunden zu werden.

2. Vakuumpumpen-Wartungsadapter (4) nach Anspruch 1,
**dadurch gekennzeichnet, dass**
das Verbindungselement (15) einen ersten Belüftungsanschluss (17), einen zweiten Belüftungsanschluss (18), eine den ersten Belüftungsanschluss (17) und den zweiten Belüftungsanschluss (18) verbindende Belüftungsleitung (19), ein in der Belüftungsleitung (19) angeordnetes Belüftungsventil, einen ersten Ölanschluss (20), einen zweiten Ölanschluss (21), eine den ersten Ölanschluss (20) und den zweiten Ölanschluss (21) verbindende Ölleitung (22) und ein in der Ölleitung (22) angeordnetes Ölventil umfasst.

3. Vakuumpumpen-Wartungsadapter (4) nach Anspruch 2,
**dadurch gekennzeichnet, dass**
das Belüftungsventil ein Rückschlagventil ist.

4. Vakuumpumpen-Wartungsadapter (4) nach Anspruch 2 oder 3,
**dadurch gekennzeichnet, dass**
das Ölventil ein Rückschlagventil ist.

5. Vakuumpumpen-Wartungsadapter (4) nach einem der Ansprüche 2 bis 4,
**dadurch gekennzeichnet, dass**
das Belüftungsventil durch das Belüftungselement (16) geöffnet wird, wenn das Belüftungselement (16) in der Belüftungsausrichtung mit dem Verbindungselement (15) verbunden ist.

6. Vakuumpumpen-Wartungsadapter (4) nach einem der Ansprüche 2 bis 5,
**dadurch gekennzeichnet, dass**
das Belüftungsventil geschlossen ist, wenn das Belüftungselement (16) mit dem Verbindungselement (15) in der Speicherausrichtung verbunden ist.

7. Vakuumpumpen-Wartungsadapter (4) nach einem der Ansprüche 2 bis 6,
**dadurch gekennzeichnet, dass**
das Ölventil durch den Ölbehälter (12) geöffnet wird, wenn der Ölbehälter (12) mit dem Anschlusselement (15) verbunden ist.

8. Vakuumpumpen-Wartungsadapter (4) nach einem der vorhergehenden Ansprüche,
**dadurch gekennzeichnet, dass**
der Vakuumpumpen-Wartungsadapter (4) ferner eine Schutzkappe umfasst, die ausgebildet ist, um mit dem Belüftungselement (16) verbunden zu werden, wenn das Belüftungselement (16) mit dem Verbindungselement (15) in der Speicherausrichtung verbunden ist.

9. Wartungseinheit (1) für eine Klimaanlageneinheit eines Fahrzeugs, umfassend ein Gehäuse (2), eine Vakuumpumpe (3) und einen Vakuumpumpen-Wartungsadapter (4) nach einem der vorhergehenden Ansprüche, wobei die Vakuumpumpe (3) eine Pumpeneinheit und einen Ölvorratsbehälter (5) umfasst, wobei der Ölvorratsbehälter (5) einen Ölablass (6) umfasst.

10. Wartungseinheit (1) nach Anspruch 9,
**dadurch gekennzeichnet, dass**
die Wartungseinheit (1) ferner eine Ölleitung (7) und eine Belüftungsleitung (8) umfasst und der Ölvorratsbehälter (5) ferner einen Öleinlass (9) und einen Belüftungsanschluss (10) umfasst, wobei der Vakuumpumpen-Wartungsadapter (4) außerhalb des Gehäuses (2) angeordnet ist, wobei die Ölleitung (7) mit dem Öleinlass (9) und dem Vakuumpumpen-Wartungsadapter (4) verbunden ist und wobei die Belüftungsleitung (8) mit dem Belüftungsanschluss (10) und dem Vakuumpumpen-Wartungsadapter (4) verbunden ist.

11. Wartungseinheit (1) nach Anspruch 10,
**dadurch gekennzeichnet, dass**
der Ölablass (6) von außerhalb des Gehäuses (2) zugänglich ist.

12. Wartungseinheit (1) nach einem der Ansprüche 9 bis 11,
**dadurch gekennzeichnet, dass**
die Vakuumpumpe (3) innerhalb des Gehäuses (2) angeordnet ist.

13. Wartungseinheit (1) nach einem der Ansprüche 9 bis 12,
**dadurch gekennzeichnet, dass**
die Vakuumpumpe (3) ferner ein von außerhalb des Gehäuses (2) sichtbares Schauglas (11) umfasst.

14. Verfahren zur Wartung einer Vakuumpumpe (3) einer Wartungseinheit (1) nach einem der Ansprüche 9 bis 13, umfassend die folgenden Schritte:
- Ablassen von verbrauchtem Vakuumpumpenöl aus dem Ölvorratsbehälter (5) der Vakuumpumpe (3) und
- Wiederbefüllen des Ölvorratsbehälters (5) der Vakuumpumpe (3) mit frischem Vakuumpumpenöl.

15. Verfahren nach Anspruch 14,
**dadurch gekennzeichnet, dass**
der Schritt des Ablassens von verbrauchtem Vakuumpumpenöl die folgenden Schritte umfasst:
- Verbinden des Belüftungselements (16) des Vakuumpumpen-Wartungsadapters (4) mit dem Verbindungselement (15) des Vakuumpumpen-Wartungsadapters (4) in der Belüftungsrichtung,
- Öffnen des Ölablasses (6) des Ölvorratsbehälters (5), und
- Schließen des Ölablasses (6) des Ölvorratsbehälters (5).

16. Verfahren nach Anspruch 15,
**dadurch gekennzeichnet, dass**
der Schritt des Ablassens von verbrauchtem Vakuumpumpenöl ferner den folgenden Schritt umfasst:
- Entfernen des Belüftungselements (16) von dem Verbindungselement (15).

17. Verfahren nach einem der Ansprüche 14 bis 16,
**dadurch gekennzeichnet, dass**
der Schritt des Nachfüllens des Ölvorratsbehälters (5) die folgenden Schritte umfasst:
- Anschließen eines unter Druck stehenden Ölbehälters (12) an das Anschlusselement (15),
und
- Entfernen des unter Druck stehenden Ölbehälters (12) von dem Anschlusselement (15).

18. Verfahren nach Anspruch 17,
**dadurch gekennzeichnet, dass**
der unter Druck stehende Ölbehälter (12) die korrekte Menge an Vakuumpumpenöl enthält, die zum Nachfüllen des Ölvorratsbehälters (5) der Vakuumpumpe (3) erforderlich ist.

19. Verfahren nach einem der Ansprüche 14 bis 18,
**dadurch gekennzeichnet, dass**
das Verfahren ferner den Schritt umfasst:
- Versetzen des Vakuumpumpen-Wartungsadapters (4) in einen Speicherzustand.

## Revendications

1. Adaptateur d'entretien de pompe à vide (4) pour entretenir une pompe à vide (3) d'une unité de service (1) pour un système de climatisation de véhicule comprenant un élément de raccordement (15) et un élément de ventilation (16),
ledit élément de raccordement (15) étant configuré pour être connecté à un récipient d'huile (12) et **caractérisé en ce que**
ledit élément de ventilation (16) est configuré pour être connecté audit élément de raccordement (15) dans une orientation de stockage et une orientation de ventilation.

2. Adaptateur d'entretien de pompe à vide (4) selon la revendication 1,
**caractérisé en ce que**
ledit élément de raccordement (15) comprend un premier raccord de ventilation (17), un deuxième raccord de ventilation (18), une ligne de ventilation (19) connectant le premier raccord de ventilation (17) et le deuxième raccord de ventilation (18), une valve de ventilation disposée dans la ligne de ventilation (19), un premier raccord d'huile (20), un deuxième raccord d'huile (21), une ligne d'huile (22) connectant le premier raccord d'huile (20) et le deuxième raccord d'huile (21), et une valve d'huile disposée dans la ligne d'huile (22).

3. Adaptateur d'entretien de pompe à vide (4) selon la revendication 2,
**caractérisé en ce que**
la valve de ventilation est un clapet anti-retour.

4. Adaptateur d'entretien de pompe à vide (4) selon la revendication 2 ou 3,
**caractérisé en ce que**
la valve d'huile est un clapet anti-retour.

5. Adaptateur d'entretien de pompe à vide (4) selon l'une quelconque des revendications 2 à 4,
**caractérisé en ce que**
la valve de ventilation est ouverte par ledit élément de ventilation (16) lorsque ledit élément de ventilation (16) est connecté audit élément de raccordement (15) dans l'orientation de ventilation.

6. Adaptateur d'entretien de pompe à vide (4) selon l'une quelconque des revendications 2 à 5,
**caractérisé en ce que**
la valve de ventilation est fermée lorsque ledit élément de ventilation (16) est connecté audit élément de raccordement (15) dans l'orientation de stockage.

7. Adaptateur d'entretien de pompe à vide (4) selon l'une quelconque des revendications 2 à 6,
**caractérisé en ce que**
la valve d'huile est ouverte par le récipient d'huile (12) lorsque le récipient d'huile (12) est connecté audit élément de raccordement (15).

8. Adaptateur d'entretien de pompe à vide (4) selon l'une quelconque des revendications précédentes,
**caractérisé en ce que**
ledit adaptateur d'entretien de pompe à vide (4) comprend en outre un capuchon de protection configuré pour être connecté audit élément de ventilation (16) lorsque ledit élément de ventilation (16) est connecté audit élément de raccordement (15) dans l'orientation de stockage.

9. Unité de service (1) pour un système de climatisation de véhicule comprenant un boîtier (2), une pompe à vide (3) et un adaptateur d'entretien de pompe à vide (4) selon l'une quelconque des revendications précédentes,
la pompe à vide (3) comprenant une unité de pompe et un réservoir d'huile (5), ledit réservoir d'huile (5) comprenant un orifice de vidange (6).

10. Unité de service (1) selon la revendication 9,
**caractérisée en ce que**
ladite unité de service (1) comprend en outre un conduit d'huile (7) et un conduit de ventilation (8) et ledit réservoir d'huile (5) comprend en outre une entrée d'huile (9) et un raccord de ventilation (10),
ledit adaptateur d'entretien de pompe à vide (4) étant situé à l'extérieur du boîtier (2),
le conduit d'huile (7) étant connecté à ladite entrée d'huile (9) et audit adaptateur d'entretien de pompe à vide (4), et le conduit de ventilation (8) étant connecté audit raccord de ventilation (10) et audit adaptateur d'entretien de pompe à vide (4).

11. Unité de service (1) selon la revendication 10,
**caractérisée en ce que**
l'orifice de vidange (6) est accessible de l'extérieur du boîtier (2).

12. Unité de service (1) selon l'une quelconque des revendications 9 à 11,
**caractérisée en ce que**
la pompe à vide (3) est située à l'intérieur du boîtier (2).

13. Unité de service (1) selon l'une quelconque des revendications 9 à 12,
**caractérisée en ce que**
la pompe à vide (3) comprend en outre un regard (11) visible de l'extérieur du boîtier (2).

14. Procédé d'entretien de pompe à vide (3) d'une unité de service (1) selon l'une quelconque des revendications 9 à 13, comprenant les étapes suivantes :
- vidanger l'huile de pompe à vide usée depuis le réservoir d'huile (5) de la pompe à vide (3) et
- remplir à nouveau le réservoir d'huile (5) de la pompe à vide (3) d'huile de pompe à vide fraîche.

15. Procédé selon la revendication 14,
**caractérisé en ce que**
l'étape de vidanger l'huile de pompe à vide usée comprend les étapes suivantes :
- connecter ledit élément de ventilation (16) de l'adaptateur d'entretien de pompe à vide (4) audit élément de raccordement (15) de l'adaptateur d'entretien de pompe à vide (4) dans l'orientation de ventilation,
- ouvrir l'orifice de vidange (6) du réservoir d'huile (5), et
- fermer l'orifice de vidange (6) du réservoir d'huile (5).

16. Procédé selon la revendication 15,
**caractérisé en ce que**
l'étape de vidanger l'huile de pompe à vide usée comprend en outre l'étape suivante :
- enlever ledit élément de ventilation (16) depuis l'élément de raccordement (15).

17. Procédé selon l'une quelconque des revendications 14 à 16,
**caractérisé en ce que**
l'étape de remplir à nouveau le réservoir d'huile (5) comprend les étapes suivantes :
- connecter un récipient d'huile pressurisé (12) audit élément de raccordement (15), et
- enlever le récipient d'huile pressurisé (12) depuis ledit élément de raccordement (15).

18. Procédé selon la revendication 17,
**caractérisé en ce que**
le récipient d'huile pressurisé (12) contient la quantité correcte d'huile de pompe à vide qui est nécessaire pour remplir à nouveau le réservoir d'huile (5) de la pompe à vide (3).

19. Procédé selon l'une quelconque des revendications 14 à 18,
**caractérisé en ce que**
le procédé comprend en outre l'étape :
- mettre ledit adaptateur d'entretien de pompe à vide (4) dans un état de stockage.
